## Europäisches Patentamt

## European Patent Office

## Office européen des brevets

(11) Veröffentlichungsnummer: **0 125 461**

**A1**

(12) # EUROPÄISCHE PATENTANMELDUNG

(21) Anmeldenummer: **84103752.6**

(22) Anmeldetag: **05.04.84**

(51) Int. Cl.³: **B 29 C 27/30**

(30) Priorität: **13.04.83 DE 3313315**

(43) Veröffentlichungstag der Anmeldung:
**21.11.84 Patentblatt 84/47**

(84) Benannte Vertragsstaaten:
**AT BE CH FR GB IT LI NL SE**

(71) Anmelder: **Haberer, Helmut**
**Sprengelstrasse 35**
**D-3167 Burgdorf(DE)**

(72) Erfinder: **Haberer, Helmut**
**Sprengelstrasse 35**
**D-3167 Burgdorf(DE)**

(74) Vertreter: **Rücker, Wolfgang, Dipl.-Chem.**
**Hubertusstrasse 2**
**D-3000 Hannover 1(DE)**

(54) Maschine zum schubfesten Verbinden von Halbprofilschalen mittels Kunststoffleisten.

(57) Beschrieben wird eine Maschine zum schubfesten Verbinden von Halbprofilschalen (7, 8) mittels Kunststoffstreifen
(9,10), wobei die Halbprofilschalen in der Machine in der
gewünschten Weise zueinander fest angeordnet sind und die
Kunststoffleisten mittels eines Schlittens, der in der Längsrichtung über die Maschine hin und her bewegbar ist, eingezogen und auch durch Verformung der Haltestege der
Kunststoffleisten in den sich gegenüber liegenden Halbprofilschalen befestigt werden.

FIG. 4

<u>Beschreibung</u>

Die Erfindung betrifft eine Maschine zum schubfesten Verbinden von Halbprofilschalen mittels Kusntstoffleisten.

Die bisher zum Verbinden der Halbprofilschalen mit den Kunststoffleisten verfügbaren Maschinen erforderten erhebliche Umrüstzeiten beim Übergang von einer Profilabmessung zur anderen. Außerdem ergaben sich erhebliche Produktausschüsse in der Anfangsphase beim Einrichten, d.h., Anpassen der Rolleneinstellungen in neue Profilabmessungen.

Die Maschine wurde nach der Aufnahme des Betriebes an die jeweiligen neuen Profilabmessungen angepasst. Das während dieser Zeit hergestellte Produkt war anfänglich nicht verwendbar. Die Umrüstzeiten nahmen einen erheblichen Teil der gesamten Arbeitszeit in Anspruch. Zur Vermeidung dieser Nachteile, wird eine Maschine nach den Merkmalen der Schutzansprüche vorgeschlagen.

Aufgabe der vorliegenden Erfindung ist es daher, eine Maschine zu schaffen, mit der sogenannte Halbprofilschalen miteinander über isolierende Kunststoffleisten schnell und fest miteinander verbindbar sind und wobei die Halbprofilschalen jede praktische Länge haben können und die Maschine an unterschiedliche Profile in einfacher Weise anpassbar ist und die eingezogenen Kunststoffleisten schubfest und in einem Arbeitsgang mit den Halbprofilschalen verbunden werden.

Gelöst wird diese Aufgabe durch die in den Ansprüchen gekennzeichnete Maschine.

Halbprofilschalen der hier beschriebenen Art, dienen im wesentlichen der Herstellung von rahmenartigen Gebilden, wobei die Kunststoffleisten einen Wärmedurchgang unterbinden, bzw. erschweren sollen und wobei diese Rahmen im wesentlichen für Fensterblendrahmen, aber auch Flügelrahmen verwendbar sind oder jede andere Art von Rahmen, bei denen es auf eine solche isolierende Trennung der beiden Hälften ankommt.

Wesentlich hierbei ist, daß der Verbund zwischen den Halbprofilschalen und den eingefügten Kunststoffleisten, eine wesntlich höhere Schubfestigkeit aufweist, so daß statisch das hergestellte Gesamtprofil als einteilig bezeichnet werden kann. Die Umrüstzeit von einer Profilgröße auf die andere konnte beispielsweise von 3 Stunden auf etwa vier Minuten reduziert werden. Auch das vollautomatische Einziehen der Kunststoffleisten in die Halbprofilschalen stellt eine erhebliche Einsparung an Herstellungszeit dar.

Durch die Verwendung eines horizontal verfahrbaren Schlittens mit Andruckrollen und in Verbindung mit den fest auf einem Tisch liegenden Profilschalen, wird die Gefahr des Verziehens des Materials behoben.

Ein Ausführungsbeispiel einer solchen Maschine ist in der Zeichnung dargestellt.

Es zeigen:

Fig. 1 eine Seitenansicht der erfindungsgemäßen
Maschine

Fig. 2 eine Draufsicht

Fig. 3 einen Querschnitt durch die Maschine im
Bereiche des Schlittens

Fig. 4 ein Detail aus Fig. 3 im vergrößerten Maßstab, wie aus der Seitenansicht der Fig. 1
hervorgeht und

Fig. 5 in noch stärkerer Vergrößerung zwei miteinander verbundene Halbprofilschalen mit den
eingezogenen Kunststoffleisten entsprechend
der Darstellung, die in Fig. 4 eingekreist
ist, wobei allerdings die Profile eine etwas andere Gestalt haben.

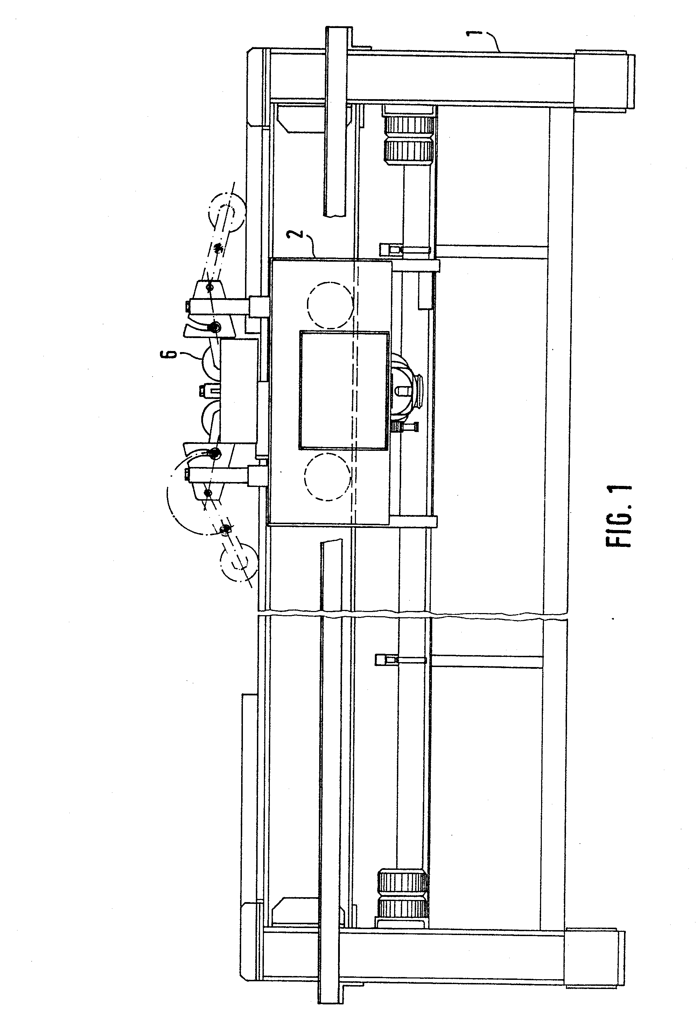

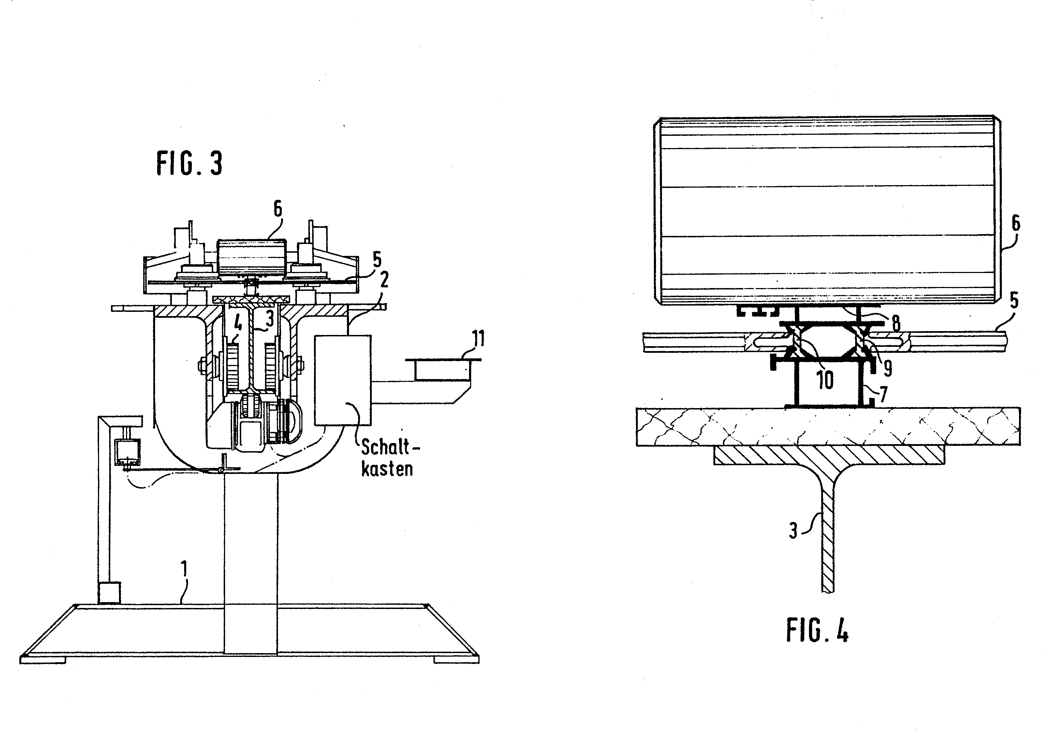

Wie aus der Seitenansicht der Fig. 1 hervorgeht, ist in
dem Maschinengestell 1 ein in Längsrichtung der Maschine hin- und herbewegbarer Schlitten 2 gelagert, der
auf einem Schlittenträger 3 läuft. Besonders deutlich ist
die Anordnung des Schlittens in Fig. 3 im Schnitt zu sehen.

Der Schlitten 2 kann elektrisch angetrieben sein,
aber auch von Hand bewegt werden und rollt auf dem Schlittenträger 3 vermittels der Führungsrollen 4 und weiterer
Führungseinrichtungen (nicht dargestellt). Auf der Oberseite des Schlittenträgers 3 ist eine Auflage 12 angeordnet, auf der die eine oder innere Halbprofilschale aufgespannt ist.

Die dafür erforderlichen Befestigungs- und Halteeinrichtungen sind der Übersichtlichkeit wegen nicht
gezeigt, zumal die lösbare Befestigung der Halbprofilschalen in unterschiedlicher Weise erfolgen kann.

Die Kunststoffleisten tragen die Bezugszeichen 9
für die rechte, unter Bezugnahme auf Fig. 4 und 10 für
die linke Kunststoffleiste.

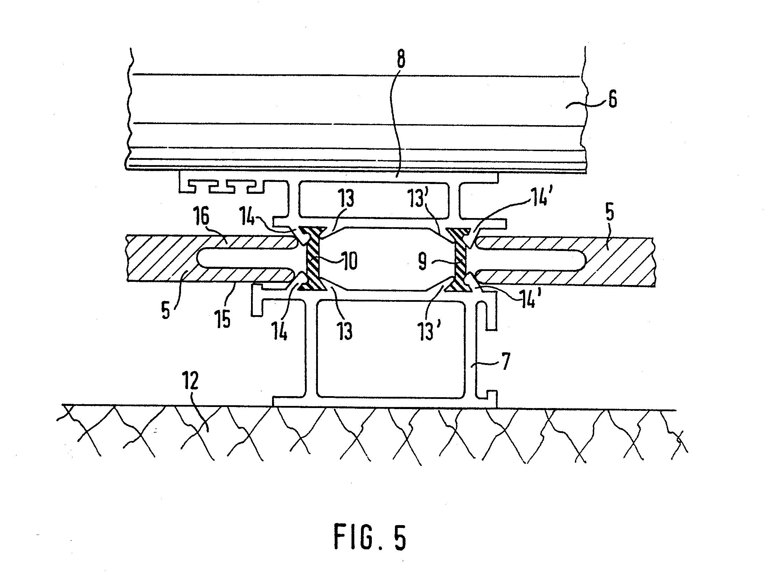

Aus Fig. 4, bzw. 5 ist ferner zu ersehen, daß
die Kunststoffleisten zwischen zwei flanschartig sich
erhebenden Stege 13 und 14, bzw. 13' und 14' mit einem
pilzförmig erweiterten Fuß gehalten sind.

Die Kunststoffleisten werden also zunächst in die
fest auf dem Tisch und im entsprechenden Abstand liegenden
Profilschalen vermittels des Schlittens 2 eingezogen,
wobei die oberen Andruckrollen 6 die äußere Halbprofilschale an einer Veränderung ihrer richtigen Stellung
hindert und sobald die Kunststoffleisten eingezogen sind,
fährt der Schlitten seitlich an den nun durch die Kunststoffleisten verbundenen Halbprofilschalen 7 und 8 vermittels der horizontalen Andruckrollen 5 entlang, wobei
die Andruckrollen auf ihrem Umfang, wie aus Fig. 4 ersichtlich, mit einer rundumlaufenden Nut versehen sind,
so daß sich zwei kreisringförmige Scheibenteile ergeben,
die in Fig. 5 die Bezugszeichen 15 und 16 tragen.

Diese sind so dimensioniert und in ihrem achsialen
Abstand zueinander bemessen, daß jeweils eine Scheibe 16
gegen den oberen Flnasch 14 der oberen Halbprofilschale
14 drückt und eine Scheibe 15 gegen den entsprechenden

Flansch 14 der inneren Halbprofilschale 7. Dadurch werden diese Flansche 14 auf der einen Seite, bzw. 14' auf der anderen Seite nach innen gepresst, nehmen den Kunststoff verformend mit, wobei die Kunststoffleisten 9 und 10 gegen die anderen flanschartigen Erhebungen 13, bzw. 13' gepresst werden, die sich ebenfalls nun in dem Kunststoff verklammern.

Ist der Schlitten 2 über die gesamte Länge des Maschinengestells, bzw. der so verbundenen Halbprofilschalen gefahren, die viele Meter lang sein können, dann ist ein schubfester Verbund aus den beiden Halbprofilschalen hergestellt, und das nun fertige, mit einer isolierenden Zwischenschicht verbundene Ganzprofil kann nun weiter verarbeitet werden, beispielsweise zu Fensterrahmen.

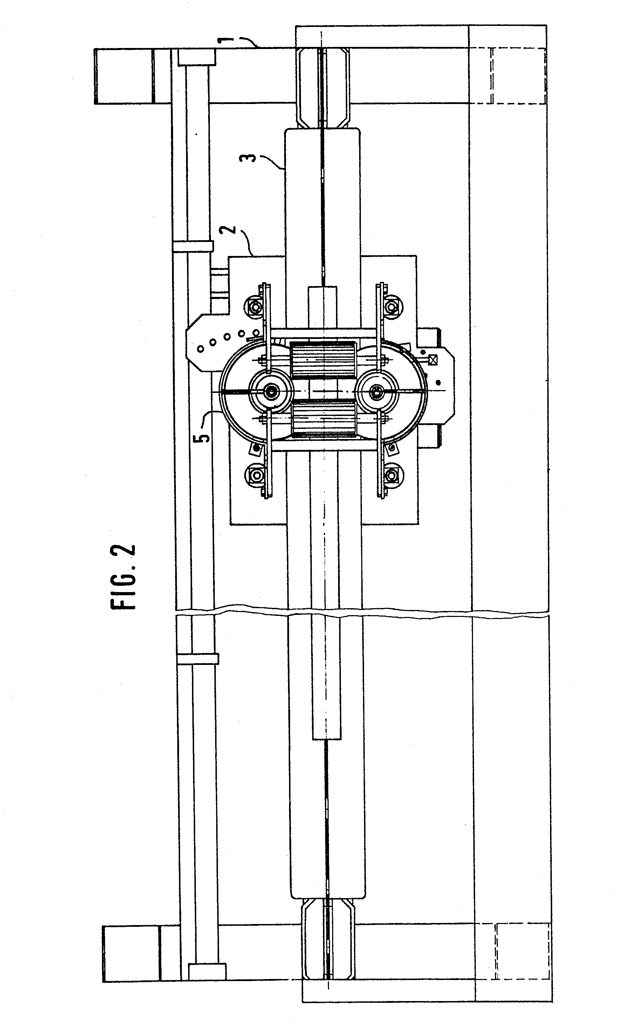

Zusammengefasst ist die Arbeitsweise so, daß der Schlitten 2 beispielsweise auf dem Wege von rechts nach links unter Berücksichtigung der Fig. 1 und 2, die Kunststoffleisten in die beiden einander gegenüber liegenden Halbprofilschalen 7 und 8 einzieht, zu welchem Zweck die Halbprofilschalen an ihren Anfängen gelocht sind und mit entsprechenden Mitnehmern (nicht gezeigt) des Schlittens verbunden werden. Bei diesem Einziehen der Kunststoffleisten erfolgt ein Aufrauhen der Innenflächen der Stege 13 und 14 der beiden Halbprofilschalen.

Hat der Schlitten 2 seine Endstellung erreicht und die Kunststoffleisten 9 und 10 eingezogen und somit zunächst beide Halbprofilschalen miteinander verbunden, werden bei der Rückkehr des Schlittens, wie oben bereits beschrieben, die Stege 14 und 14' durch die Scheiben 5 verformt.

Das Bezugszeichen 11 bezeichnet einen Aufnahmetisch für die Elemente, die durch vollautomatisches Einziehen der Kunststoffleisten in den Halbprofilschalen entstehen und die dann miteinander schubfest verbunden werden.

P a t e n t a n s p r ü c h e          **0125461**

1. Maschine zum schubfesten Verbinden von Halbprofilschalen mittels Kunststoffleisten, gekennzeichnet durch
Mittel zum vollautomatischen Ineinanderfügen der Kunststoffleisten (9,10) mit den Halbprofilschalen (7,8),
nach vorherigem Aufrauhen der an den Kunststoffleisten
anliegenden Flächen der Halbprofilschalen mit Hilfe
von Rändelwerkzeugen.

2. Maschine nach Anspruch 1, gekennzeichnet durch Mittel zur Verformung der Stege (13,14) der Halbprofilschalen nach dem Einziehen der Kunststoffleisten (9,10).

3. Maschine nach Anspruch 1, und/oder 2, gekennzeichnet
durch einen Klebstoffbehälter zur Einstreichung der an
den Halbprofilschalen anliegenden Flächen der Kunststoffstäbe mit Klebemasse.

4. Maschine nach Anspruch 1 - 3, gekennzeichnet durch
einen Schlitten mit verzahnten Andruckrollen (5) zur
Verformung der die Kunststoffleisten (9,10) umklammernden Stege (13,14) der Halbprofilschalen (7,8).

5. Maschine nach Anspruch 4, gekennzeichnet dadurch, daß
der Abstand der verzahnten Andruckrollen (5), stufenlos
für jedes Profil verstellbar ist.

6. Maschine nach Anspruch 1 - 5, <u>dadurch gekennzeichnet</u>, daß der Schlitten (2) zusätzlich mit zwei vertikal wirkenden Andruckrollen (6) zur Verhinderung des Verziehens der Profile während der mechanischen Verbindung ausgerüstet ist.

7. Maschine nach Anspruch 6, <u>dadurch gekennzeichnet</u>, daß die vertikal wirkenden Andruckrollen (6) stufenlos an unterschiedliche Profilstärken anpassbar sind.

FIG. 1

0125461

FIG. 2

FIG. 3

6

5

2

4  3

11

Schaltkasten

1

FIG. 4

6

5

8

9

10

7

3

3/4

0125461

FIG. 5

# EUROPÄISCHER RECHERCHENBERICHT

**Europäisches Patentamt**

## EINSCHLÄGIGE DOKUMENTE

EP 84103752.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE - A1 - 2 554 663 (PASCHE) <br> * Gesamt * <br> -- | 1,3-5 | B 29 C 27/30 |
| A | DE - A1 - 3 122 150 (SOLVAY) <br> * Gesamt * <br> -- | 1,3 | |
| A | DE - A1 - 2 361 323 (SCHÜCO) <br> * Gesamt * <br> -- | 1 | |
| A | DE - A1 - 2 744 553 (HARTMANN) <br> * Gesamt * <br> -- | 1 | |
| A | DE - B2 - 2 612 654 (DYNAMIT NOBEL) <br> * Gesamt * <br> -- | | |
| A | DE - B - 1 267 414 (ALUMINIUM PRESS- UND WALZWERK MÜNCHENSTEIN) <br> * Gesamt * <br> -- | | |
| A | DE - A1 - 3 129 567 (PASCHE) <br> * Gesamt * <br> ---- | | |

**RECHERCHIERTE SACHGEBIETE (Int. Cl. 3)**

B 29 C
B 29 D

Der vorliegende Recherchenbericht wurde für alle Patentansprüche erstellt.

| Recherchenort <br> WIEN | Abschlußdatum der Recherche <br> 23-07-1984 | Prüfer <br> MAYER |
|---|---|---|